# EUROPÄISCHE PATENTSCHRIFT

(11) **EP 0 601 342 B1**
(45) Veröffentlichungstag und Bekanntmachung des Hinweises auf die Patenterteilung: **11.12.1996**
(21) Anmeldenummer: 93118104.4
(22) Anmeldetag: 09.11.1993
(51) Int. Cl.: B29C 55/16

(54) **Vorrichtung zur simultanen, biaxialen Behandlung von Folienbahnen**
Apparatus for the simultaneous biaxial treatment of films
Appareil pour le traitement biaxial simultané de films

(30) Priorität: 08.12.1992 DE 4241213
(43) Veröffentlichungstag der Anmeldung: 15.06.1994
(73) Patentinhaber: LINDAUER DORNIER GESELLSCHAFT M.B.H, D-88129 Lindau (DE)
(72) Erfinder: Rutz, Andreas, Dr.-Ing., D-88131 Lindau (DE)

(56) Entgegenhaltungen:
- EP-A- 0 291 775
- DE-A- 4 115 122
- PATENT ABSTRACTS OF JAPAN vol. 10, no. 222 (M-504)(2278) 2. August 1986 & JP-A-61 058 723 (TORAY IND. INC.)
- PATENT ABSTRACTS OF JAPAN vol. 12, no. 64 (M-672)(2911) 26. Februar 1988 & JP-A-62 211 124 (TORAY IND. INC.)

## Beschreibung

Gegenstand der Erfindung ist eine Vorrichtung nach dem Oberbegriff des Patentanspruchs 1. Eine derartige Vorrichtung ist mit der auf den gleichen Anmelder zurückgehenden EP 0 291 775 A2 bekannt geworden. Bei dieser bekannten Vorrichtung werden Spannkluppen verwendet, deren gegenseitiger Abstand (Teilung) kontinuierlich verändert werden kann. Hierzu beschreibt die Druckschrift eine sogenannte Knickgliederkette, die im wesentlichen aus Kettengliedern besteht, die im gestreckten Zustand eine Ebene bilden, die aber im ausgelenkten Zustand nicht mehr in einer Ebene liegen, sondern die Kettenglieder bilden einen in der Draufsicht zick-zack-förmigen Verlauf.

Zwischen den Spannkluppen ist ein zusätzliches Kettenglied eingefügt, so daß eine Auslenkung der Kettenglieder zwischen zwei benachbarten Spannkluppen überhaupt möglich wird. D.h. die Spannkluppen sind gelenkig über das die Spannkluppen verbindende Kettenglied miteinander verbunden und können relativ zueinander verschoben werden. Bei dieser bekannten Spannkluppe müssen die Verstellkräfte, die zur Veränderung der Teilung zwischen den Spannkluppen auf die Spannkluppen wirken, über das zusätzliche Kettenglied von der Kluppenführung aufgenommen werden. Nachdem die Spannkluppe selbst einen Teil der Kette bildet und in sich starr ist, kann deshalb die Veränderung der Teilung nur über das Auslenken des zwischen den Spannkluppen angeordneten zusätzlichen Kettengliedes erfolgen. Damit sind nur geringe Teilungsveränderungen möglich, weil eine relative Verstellung der Spannkluppen gegeneinander nur über ein relativ geringfügiges Auslenken des die Spannkluppen verbindenden Kettengliedes führt. Der Schwenkpunkt der einander benachbart angeordneten Spannkluppen liegt also nicht im Kluppenkörper, sondern in einem Anlenkpunkt außerhalb des Kluppenkörpers. Daraus ergibt sich ein relativ großer Kettenabschnitt zwischen Mitte-Kluppenkörper zur Mitte des benachbarten Kluppenkörpers und demzufolge eine relativ große Teilungslänge, was nicht erwünscht ist.

Dadurch, daß die Verstellkräfte über die Kluppenführung aufgenommen werden müssen, muß die Kluppenführung relativ groß dimensioniert werden. Es handelt sich hierbei um die als Federband ausgebildete Führungsschiene und die darauf abrollenden Führungs- und Tragrollen.

Insbesondere bei diesem Ausführungsfall müssen die hinteren Lager der Führungsrollen relativ groß dimensioniert werden. Der Erfindung liegt deshalb die Aufgabe zugrunde, eine Vorrichtung der eingangs genannten Art so weiterzubilden, daß die Gelenkstelle des die Verstellkräfte zur Änderung der Teilung "T" zwischen den benachbarten Spannkluppen übertragenden Gelenkmechanismus innerhalb der Spannkluppe liegt, daß das Rollteil jeder Spannkluppe von Kraftfluß der Verstellkräfte unberührt bleibt und daß die Anzahl der Anlenkpunkte für die Kettenglieder je Spannkluppe verringert wird.

Zur Lösung der gestellten Aufgabe ist die Erfindung durch die technische Lehre des Anspruches 1 gekennzeichnet.

Wesentliches Merkmal der Erfindung ist, daß nun ein zusätzliches, die Spannkluppen verbindendes gelenkiges Kettenglied entfällt. Demzufolge entfällt auch der Drehpunkt dieses gelenkigen Kettengliedes, der bei der älteren Veröffentlichung außerhalb des Kluppenkörpers lag. Nach der Erfindung werden nun die Spannkluppen sozusagen "zusammengezogen", indem dieser Drehpunkt nun nicht mehr außerhalb der Kluppenkörper liegt, sondern in den Mittenbereich der Spannkluppe verlegt wird. Dadurch wird es nun erstmals möglich, benachbarte Spannkluppen mit geringem Zwischenraum gelenkig miteinander zu verbinden, weil das vorher erwähnte Kettenglied zwischen den Spannkluppen entfällt. Dadurch ergibt sich eine geringere Teilungslänge, was ein wesentlicher Vorteil gegenüber dem Stand der Technik darstellt.

Gleichzeitig ergibt sich auch ein größerer Verstellbereich, weil bei geringerer Teilungslänge ein bestimmter (gleicher) Verstellweg des erfindungsgemäßen Gelenkmechanismus zu einer größeren Veränderung der Teilungslänge führt.

Ein weiteres wesentliches Merkmal der Erfindung ist, daß die Verstellbewegung zum Zweck der Veränderung der Teilungslänge nun nicht mehr über das Führungssystem der Spannkluppe aufgenommen werden muß, sondern diese Verstellbewegung wirkt nun unmittelbar auf die Kettenlaschen. Damit ergibt sich der Vorteil, daß die als Federband ausgebildete Führungsschiene und die am Kluppenkörper abrollenden Führungs- und Tragrollen nun mit relativ klein dimensionierten Lagern ausgebildet werden können, weil diese keine zusätzlichen Verstellkräfte mehr aufzunehmen haben. Diese Lager müssen deshalb nur noch die Lagerkräft aufnehmen, die durch die Führungseigenschaft des Kluppenkörpers auf die Führungsschiene ausgeübt werden.

Der Verstellantrieb zur Veränderung der Kettenteilung wirkt im Sinne einer gegeneinander gerichteten Spreizbewegung zwischen eine der Kettenlaschen, z.B. zwischen der äußeren Kettenlasche und dem Kettenglied.

Wichtig ist, daß diese Spreizbewegung zum Zweck der Verstellung auf relativ einfache Weise bewerkstelligt werden kann, z.B. über eine entsprechenden Spreizantrieb, der als Spindel ausgebildet sein kann, wobei mit einer Spindelmutter mit rechts- und linksgängigem Gewinde die beiden gegenüberliegenden und fluchtend zueinander angeordneten Gewindebolzen auseinandergetrieben und zusammengezogen werden. Statt des beschriebenen Spindelantriebes ist als weiterer Antrieb ein Exzenter vorgesehen, welcher sich mit seinen beiden Exzenterflächen an den jeweiligen Steuerschienen abstützt und so die Steuerschienen senkrecht zur Kettenlaufrichtung verschiebt.

Nach der Erfindung besteht also der wesentliche Vorteil, daß gegenüber dem Stand der Technik die Spannkluppe selbst nicht mehr in den Kraftfluß zur Verstellung der Spannkluppe einbezogen wird, sondern daß die Verstellkräfte innerhalb der Kette aufgenommen werden.

Jede Spannkluppe ist daher nur noch an einen Punkt im Bereich einer Achse mit der Kette verbunden, was beim Stand der Technik nicht der Fall war, weil dort die Spannkluppe über zwei vonander beabstandet angeordnete Achsen mit der Kette verbunden war. Damit war die Spannkluppe beim Stand der Technik in den Kraftfluß eingeschlossen und mußte entsprechend groß dimensioniert ausgeführt werden, was bei der Erfindung nicht mehr notwendig ist. Es sind dies die Achsen zwischen der Kette und der Spannkluppe, die beim Stand der Technik relativ groß dimensioniert werden mußten und die bei der Erfindung kleiner dimensioniert werden können.

Im Vergleich mit der Lösung nach dem Stand der Technik hat sich gezeigt, daß ein gleicher Verstellweg an der Spannkluppe zu einer um 30 % vergrößerten Teilungsveränderung führt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine Spannkluppe mit Kette in Richtung der Linie I-I in Figur 2, wobei der obere Halbschnitt den ausgelenkten Zustand und der untere Halbschnitt den nicht ausgelenkten Zustand zeigt,
- Figur 2:: Ansicht der Anordnung nach Figur 1 in Richtung des Pfeiles II,
- Figur 3:: Draufsicht der Anordnung in Richtung des Pfeiles III in Figur 2,
- Figur 4:: Stirnansicht der Anordnung in Richtung der Pfeiles IV in Figur 1,
- Figur 5:: Ansicht der Anordnung in Richtung der Pfeile V in Figur 2 und Figur 4,
- Figur 6:: die gleiche Darstellung wie Figur 5 bei ausgelenkter Kette in Richtung des Pfeiles VI in Figur 1.

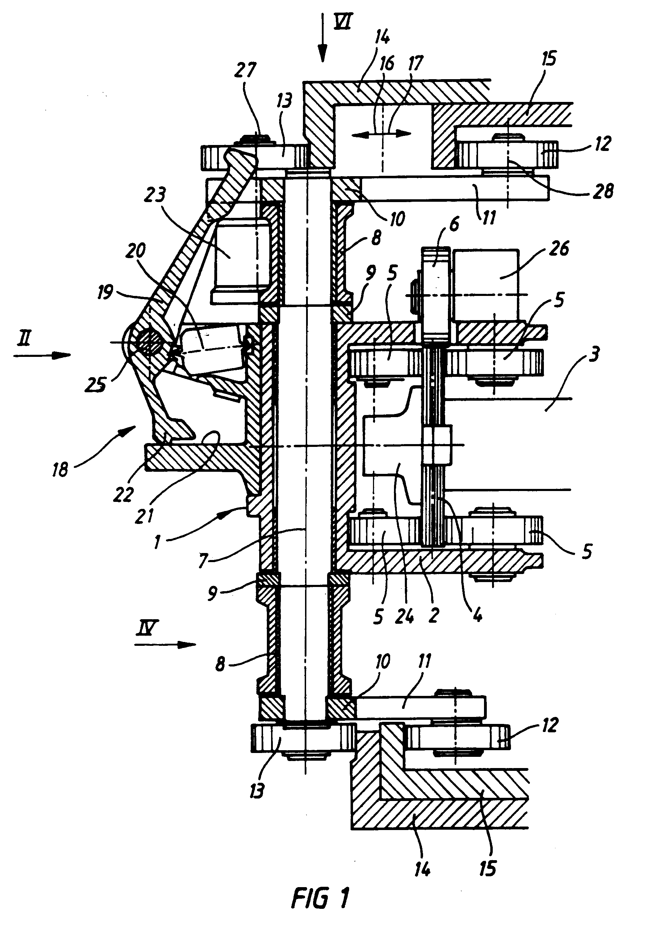

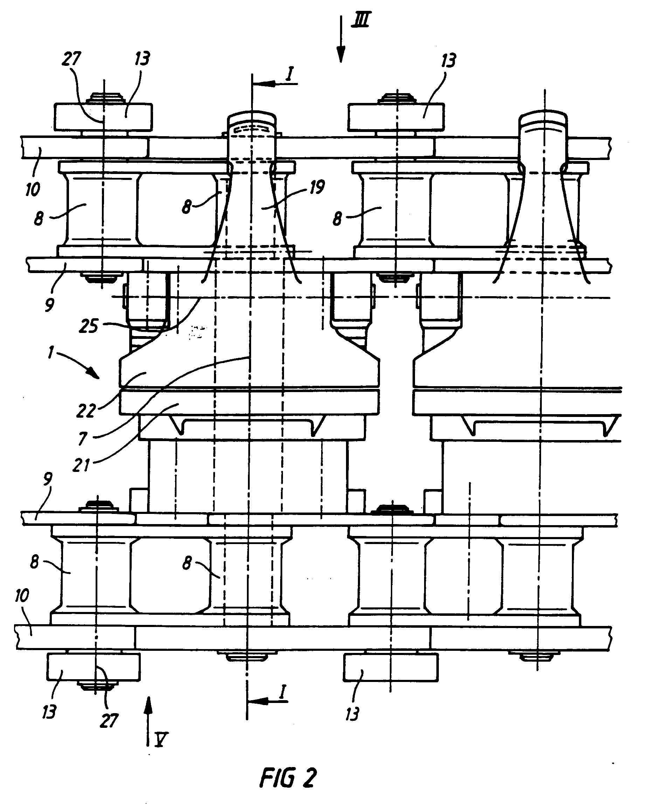

Gemäß Figuren 1 und 2 besteht die Spannkluppe 1 im wesentlichen aus einem Kluppenkörper 2, der etwa C-förmig profiliert ist und der mittig von einer Achse 7 durchgriffen ist, die drehbar in dem Kluppenkörper 2 gelagert ist. Auf den jeweils äußeren Achsstummeln der Achse 7 ist jeweils eine innere Kettenlasche 9 der Kette drehfest mit der Achse 7 verbunden.

Es wird im übrigen darauf hingewiesen, daß die Spannkluppe 1 nach Figur 1 im wesentlichen spiegelsymmetrisch zur Längsmittenachse ist, so daß die Erläuterung des oberen Halbschnittes für den unteren Halbschnitt gilt.

Auf dem äußeren Achsstummel jeder Achse 7 ist ferner ein Kettenglied 8 der Kette drehbar gelagert und von der Achse 7 durchgriffen. Das äußerste Ende der Achse 7 ist jeweils drehfest mit der äußeren Kettenlasche 10 verbunden, die erfindungsgemäß als Kniehebel ausgebildet ist und als Verstellhebel 11 wirkt.

Am freien äußeren Ende der äußeren Kettenlasche (äußeres Ende des Verstellhebels 11) ist eine Verstellrolle 12 angeordnet. Diese Verstellrolle 12 wälzt sich an dar Innenseite einer inneren Steuerschiene 15 ab.

Diese innere Steuerschiene 15 ist in Bereich einer äußeren verstellbaren Steuerschiene 14 in den Pfeilrichtungen 16,17 verschiebbar geführt, wobei sich an der äußeren Steuerschiene eine Verstellrolle 13 abwälzt, die auf einer Achse 27 drehbar gelagert ist, welche Achse gemäß Figur 2 die äußere Kettenlasche 10, das Kettenglied 8 und die innere Kettenlasche 9 durchgreift.

Am vorderen Teil des Kluppenkörpers ist das Greifteil 18 angeordnet, welches im wesentlichen aus einer Klappe 19 besteht, die in einem Schwenklager 25 schwenkbar gelagert ist, welches Schwenklager 25 im Greifteil 18 angeordnet ist. Die Klappe 19 ist als zweiarmiger Hebel ausgebildet, wobei der eine Hebelarm als Klemmkopf 22 ausgebildet ist, dessen Klemmteil mit einem greifteilfesten Greiftisch 21 zusammenwirkt. Das gegenüberliegende Ende der Klappe 19 dient zum Öffnen und Schließen, wobei der Öffnungs- und Schließmechanismus nicht dargestellt ist. Das Federelement 20 dient zur Aufbringung einer Federvorspannung auf die Klappe 19, die damit entweder in Öffnungs- oder Schließstellung gehalten wird.

Im Innenbereich des C-förmig ausgebildeten Kluppenkörpers 2 sind die Führungsvorrichtungen angeordnet. Im wesentlichen ist eine als Federband ausgebildete Führungsschiene 4 vorhanden, die mit einer Druckleiste 24 an dem Kettenbahnträger 3 befestigt wird. Am Kluppenkörper im Bereich der C-förmigen Ansätze sind hierbei insgesamt 8 Führungsrollen 5 angeordent, von denen in Figur 1 nur Jeweils die zwei oberen und zwei unteren Führungsrollen 5 dargestellt sind, während die davorliegenden Führungsrollen nicht sichtbar sind.

Es ist ferner an der Außenseite des C-förmigen Kluppenkörpers 2 ein Befestigungsklotz 26 angeordnet, der eine Tragrolle 6 trägt, welche das Eigengewicht des gesamten Kluppenkörpers 2 auf die Oberseite der Führungsschiene 4 überträgt.

In Figur 1 zeigt der obere Halbschnitt den ausgelenkten Zustand der Kette, wobei ein Kettenglied 23 noch sichtbar ist. D.h. das im Schnitt dargestellte, ausgelenkte Kettenglied 8 ist noch in diesem Zustand in Form des Kettengliedes 23 sichtbar. In Figur 2 sind die gleichen Teile wie in Figur 1 mit den gleichen Bezugszeichen versehen. Wichtig ist, daß die Achse 27 jeweils die äußere und innere Kettenlasche 9,10 durchgreift und daß die äußere Kettenlasche 10 gleichzeitig als Verstellhebel 11 ausgebildet ist. Die Figur 2 zeigt also, daß ein gesondertes gelenkiges Verbindungsglied zwischen den Spannkluppen nicht mehr erforderlich ist, weil die Spannkluppen unmittelbar über das eine Kettenglied 8 und die dazugehörenden inneren und äußeren Kettenlaschen 9,10 gelenkig miteinander verbunden sind.

Dadurch ergibt sich die vorher erwähnte geringere Kettenteilung 29 auf die in den folgenden Figuren noch eingegangen wird.

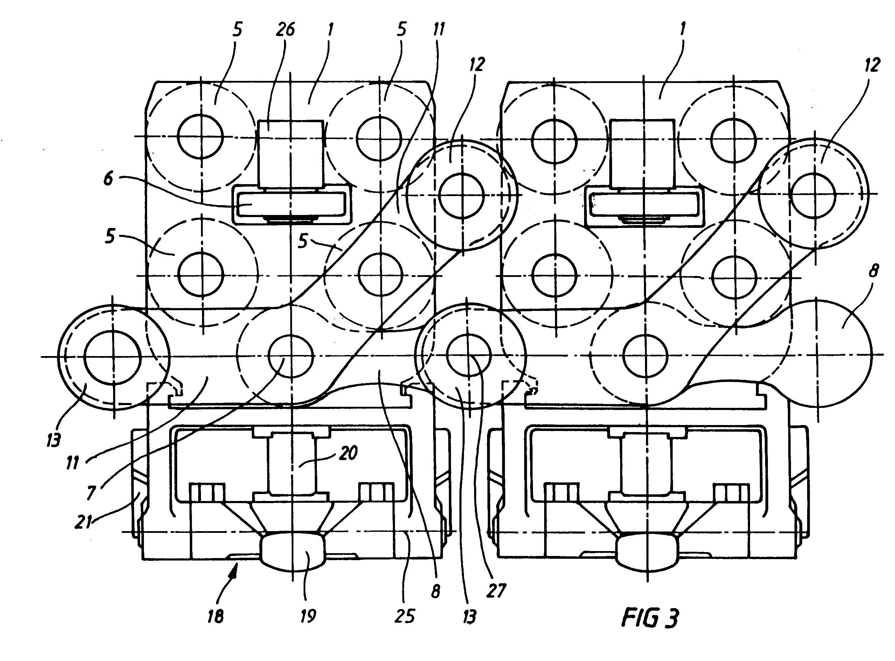

Gemäß Figur 3 ist erkennbar, daß die äußeren Kettenlaschen 10 als abgewinkelter Kniehebel ausgebildet sind und somit den Verstellhebel 11 ausbilden.

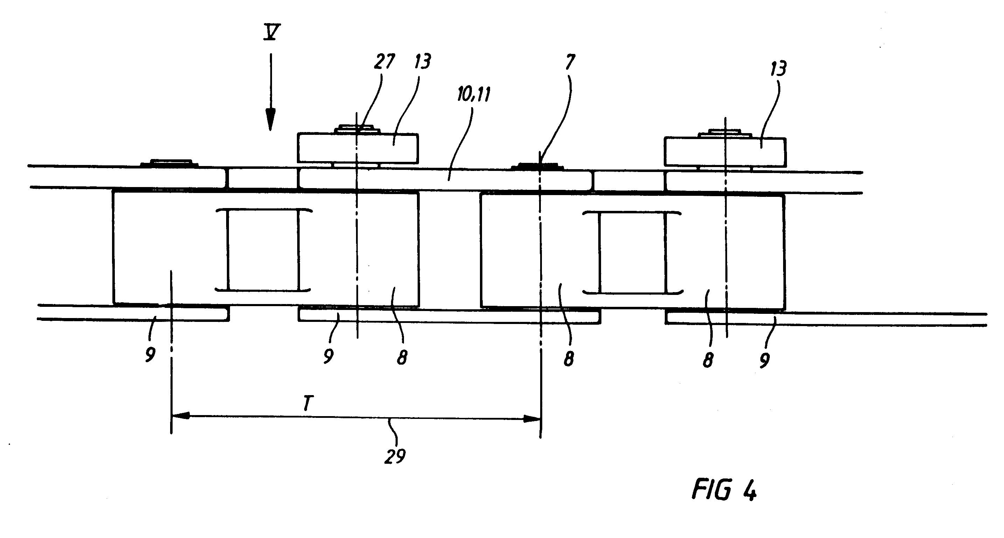

Anhand der Figuren 4 - 6 wird nun das Verstellen der Teilung 29 näher beschrieben.

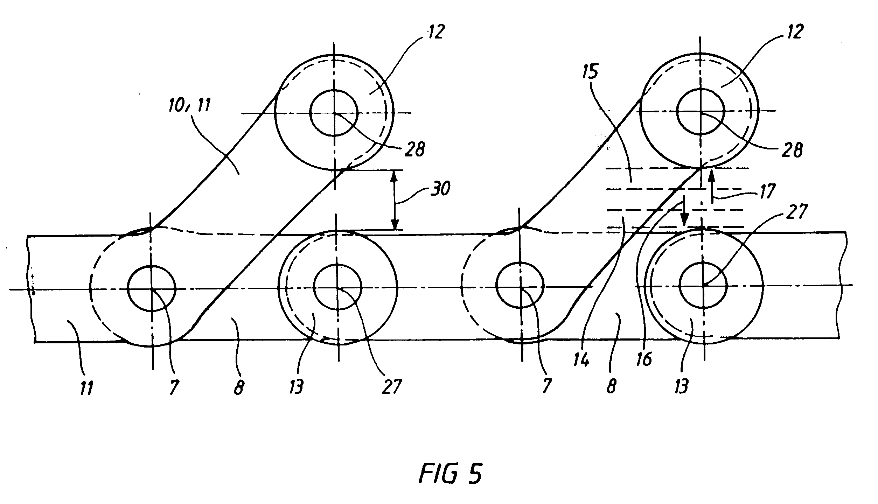

Wie vorher erwähnt, erfolgt ein Auseinanderspreizen im Bereich des Abstandes 30 (Figur 5) um die Kettenteilung 29 (Fig. 4) zu verändern. Hierzu ist es vorgesehen, daß eine entsprechende Spreizkraft auf die äußere Steuerschiene 14 und die innere Steuerschiene 15 aufgebracht wird, die in den Pfeilrichtungen 16,17 wirkt.

Die beiden Steuerschienen 14,15 werden also durch eine entsprechende Spreizvorrichtung auseinandergedrückt, wobei - wie vorher erwähnt - eine ein Rechts- und Linksgewinde aufweisende Spindel mit einer entsprechenden Spindelmutter verwendet wird. Der Drehantrieb für die Spreizvorrichtung wirkt dann auf die Spindelmutter. Der Spreizantrieb wirkt wie ein Spannschloß, bei dem ebenfalls durch Drehung einer Spindelmutter die beiden einander gegenüberliegenden und zueinander fluchtenden Gewindebolzen gegeneinander verstellt werden.

Die Verstellrolle 12 ist hierbei auf einer Achse 28 gelagert, welche durch das freie äußere Ende der Kettenlasche 10 hindurchgreift.

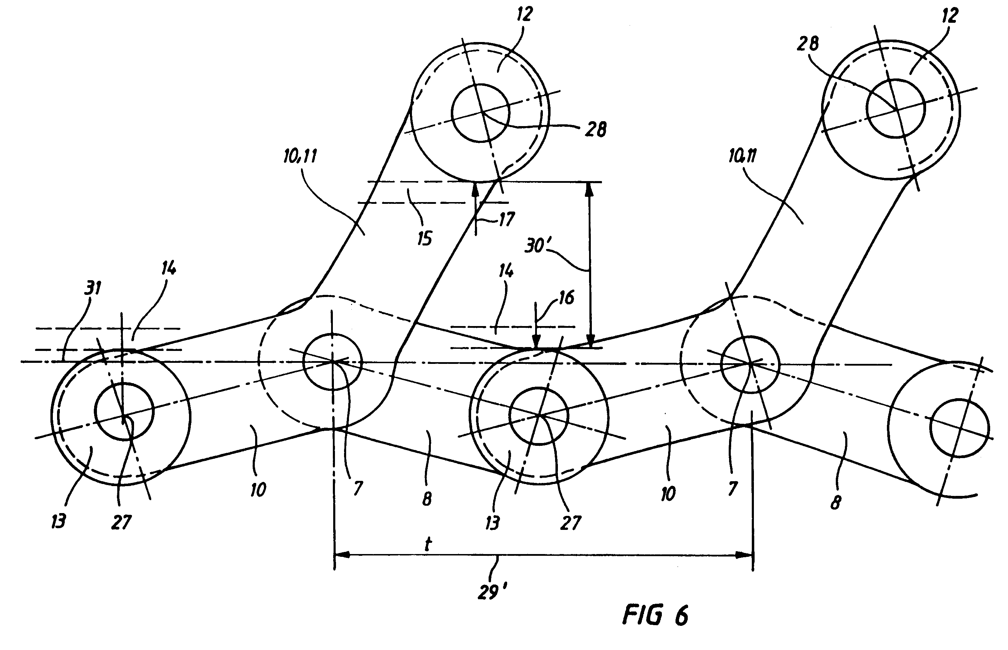

Die Figur 6 zeigt den auseinandergespreizten Zustand, d.h. die Teilung 29 nach Figur 4 wird in eine verkürzte Teilung 29' übergeführt, indem der Abstand 30 in den Abstand 30' übergeführt wird durch entsprechendes Auseinanderspreizen der Steuerschienen 14,15 in den Pfeilrichtungen 16,17.

Aus dem Vergleich zwischen der Figur 5 und der Figur 6 wird deutlich, daß eine entsprechende Verstellbewegung zu einer nennenswerten Verkürzung der Teilung in Richtung auf die Teilung 29' führt. Dies kommt daher, daß kein gelenkiges Zwischenglied mehr zwischen den Achsen 7 wirkt, sondern daß nur noch eine einzige freie Achse 27 vorhanden ist, welche die Verstellrolle 13 trägt.

Der Kern der Erfindung liegt also darin, daß man ein Ketten glied einspart, die Spannkluppe außerhalb des Kettenkraftflusses liegt und die Kräfte, die für die Teilungsverkürzung notwendig sind, innerhalb der Kette beläßt. Dies wird konstruktiv nach der Erfindung dadurch erreicht, daß mindestens eine der Kettenlaschen, entweder die innere Kettenlasche 9 oder die äußere Kettenlasche 10 als abgewinkelter Kniehebel ausgebildet ist und auf das freie schwenkbare Ende dieses Kniehebels ummittelbar eine Verstelleinrichtung wirkt, welche den Kniehebel um eine kluppenkörperfeste Achse 7 schwenkt, wobei das andere Teil dieses schwenkbaren Kniehebels (Kettenlasche 10) unmittelbar die Druckkraft auf die Kette ausübt.

Alle kluppenkörperfesten Achsen 7 bleiben in der Zugachse 31 (Figur 6) ausgerichtet. Damit wird deutlich, daß der Kluppenköper 2 selbst an der Kraftübertragung nicht teilnimmt, weil der Drehpunkt der äußeren Kettenlasche 10 in der kluppenkörperfesten Achse 7 liegt und nur eine einzige Achse vorhanden ist.

Damit ergibt sich der wesentliche Vorteil, daß der Kluppenkörper 2 nur noch der Führung des Greifteils 18 und der Kette, bestehend aus Kettengliedern 8 und Laschen 9,10, dient. Auf die relativ groß dimensionierten Lager im Bereich der Führungsrolle 5 und der Tragrolle 6 kann verzichtet werden.

### ZEICHNUNGSLEGENDE

- 1: Spannkluppe
- 2: Kluppenkörper
- 3: Kettenbahnträger
- 4: Führungsschiene
- 5: Führungsrolle
- 6: Tragrolle
- 7: Achse
- 8: Kettenglied
- 9: innere Kettenlasche
- 10: äußere Kettenlasche
- 11: Verstellhebel
- 12: Verstellrolle
- 13: Verstellrolle
- 14: Steuerschiene (äußere)
- 15: Steuerschiene (innere)
- 16: Pfeilrichtung
- 17: Pfeilrichtung
- 18: Greifteil
- 19: Klappe
- 20: Federelement
- 21: Greiftisch
- 22: Klemmkopf
- 23: Kettenglied
- 24: Druckleiste
- 25: Schwenklager
- 26: Befestigungsklotz
- 27: Achse
- 28: Achse
- 29: Teilung 29'
- 30: Abstand 30'
- 31: Zugachse

## Patentansprüche

1. Vorrichtung zur simultanen, biaxialen Behandlung von Folienbahnen mit an wenigstens einer Führungsschiene endlos umlaufenden und mit Greifteilen zum Einspannen der Ränder der Folienbahn versehenen, mit auslenkbaren Kettenlaschen verbundenen und Führungsvorrichtungen aufweisende Spannkluppen, deren gegenseitiger Abstand zwecks Veränderung der Teilung kontinuierlich einstellbar ist, **dadurch gekennzeichnet**, daß jede Spannkluppe (1) lediglich eine den Kluppenkörper (2) der Spannkluppe (1) durchgreifende Achse (7) aufweist, an die eine (z.B. eine innere) Kettenlasche (9) angreift, daß an die Achse (7) ferner eine andere (z.B. eine äußere) Kettenlasche (10) angreift und daß diese Kettenlasche (10) als abgewinkelter Verstellhebel (11) ausgebildet ist, an dessen einem Ende eine erste Verstellrolle (12) drehbar gelagert ist, die sich an einem etwa senkrecht zur Kettenlängsachse ersten verstellbaren Teil einer Steuerschiene (15) abstützt, wobei am anderen Ende dieser Kettenlasche (10) eine zweite Verstellrolle (13) angeordnet ist, deren Achse (27) die beiden Kettenlaschen (9,10) und ein Kettenglied (8) durchgreift und die sich an einem zweiten verstellbaren Teil einer Steuerschiene (14) abwälzt.

2. Vorrichtung nach Anspruch 1, **dadurch gekennzeichnet**, daß jede Steuerschiene zweiteilig ausgebildet ist und aus der inneren, verstellbaren Steuerschiene (15) besteht, die in einer verstellbaren, äußeren Steuerschiene (14) verstellbar geführt ist und daß sich an der äußeren Steuerschiene (14) die Verstellrolle (13) abwälzt, die auf der Achse (27) drehbar gelagert ist, welche die äußere Kettenlasche (10), das Kettenglied (8) und die innere Kettenlasche (9) durchgreift.

3. Vorrichtung nach Anspruch 1 oder 2, **dadurch gekennzeichnet**, daß der Kluppenkörper (2) etwa C-förmig profiliert ist, in dessen Innenbereich die Führungsvorrichtungen angeordnet sind, die im wesentlichen aus auf vertikal verlaufenden Achsen angeordneten Führungsrollen (5) bestehen, die an Laufflächen einer als Federband ausgebildeten Führungsschiene (4) abrollen und ferner aus auf einer horizontal verlaufenden Achse drehbar gelagerten Tragrolle (6) besteht, welche das Eigengewicht der Spannkluppe (1) auf die Oberseite der Führungsschiene (4) überträgt.

4. Vorrichtung nach einem der Ansprüche 1 - 3, **dadurch gekennzeichnet**, daß zur Verstellung der Teilung (29,29') zwischen den Spannkluppen (1) eine Spreizkraft zwischen der äußeren und der inneren Steuerschiene (14,15) mit einer Spreizvorrichtung erzeugt wird.

5. Vorrichtung nach Anspruch 4, **dadurch gekennzeichnet**, daß die Spreizvorrichtung als drehend angetriebene Gewindemutter mit einem ersten und einem zweiten Gewindeabschnitt ausgebildet ist, deren Gewindesteigungen gegenläufig sind, in welche zugeordnete Gewindespindeln eingreifen, die sich mit ihren Enden an den beiden Steuerschienen (14,15) abstützen.

6. Vorrichtung nach Anspruch 4, **dadurch gekennzeichnet**, daß die Spreizvorrichtung als drehend angetriebener Exzenter ausgebildet ist, der sich mit seinen Exzenterflächen an der inneren und äußeren Steuerschiene (14,15) abstützt.

## Claims

1. Apparatus for the simultaneous biaxial treatment of film webs, having clamping clips which circulate continuously on at least one guide rail, are provided with gripping portions for clamping the edges of the film web, are connected to deflectable link plates and have guide devices, and the distance between which clamping clips is continuously adjustable for the purpose of changing the pitch, characterised in that each clamping clip (1) has only one axis (7), which extends through the clip body (2) of the clamping clip (1) and on which a (for example, an inner) link plate (9) acts, in that another (for example, an outer) link plate (10) also acts on the axis (7), and in that that link plate (10) is in the form of an angled adjusting lever (11) on one end of which is rotatably mounted a first adjusting roller (12) which is supported on a first adjustable portion of a control rail (15), which portion is approximately perpendicular to the longitudinal axis of the chain, there being arranged at the other end of this link plate (10) a second adjusting roller (13) of which the axis (27) extends through the two link plates (9, 10) and a chain link (8) and which rolls along a second adjustable portion of a control rail (14).

2. Apparatus according to claim 1, characterised in that each control rail is in two portions and comprises the inner, adjustable control rail (15) which is guided adjustably in an adjustable outer control rail (14), and in that the adjusting roller (13) which is rotatably mounted on the axis (27) extending through the outer link plate (10), the chain link (8) and the inner link plate (9) rolls along the outer control rail (14).

3. Apparatus according to claim 1 or 2, characterised in that the clip body (2) has an approximately C-shaped profile in the inner region of which are arranged the guide devices which consist substantially of guide rollers (5) which are arranged on vertically extending axes and which roll along running faces of a guide rail (4), which is in the form of a spring band, and also comprises a carrier roller (6) which is rotatably mounted on a horizontally extending axis and which transfers the dead weight of the clamping clip (1) onto the upper side of the guide rail (4).

4. Apparatus according to any one of claims 1 to 3, characterised in that, in order to adjust the pitch (29, 29') between the clamping clips (1), a spreading force is generated between the outer and the inner control rail (14, 15) using a spreading device.

5. Apparatus according to claim 4, characterised in that the spreading device is in the form of a threaded nut which is driven in rotation and which has a first and a second threaded section of which the thread pitches are oppositely directed and in which engage associated threaded spindles which are supported at their ends on the two control rails (14, 15).

6. Apparatus according to claim 4, characterised in that the spreading device is in the form of an eccentric which is driven in rotation and which is supported at its eccentric faces on the inner and outer control rail (14, 15).

## Revendications

1. Appareil pour le traitement biaxial simultané de films, comportant des pinces de serrage qui tournent sans fin sur au moins une glissière de guidage, sont munies de pièces de préhension pour enserrer les bords du film, sont reliées à des maillons pouvant être déviés, présentent des dispositifs de guidage, et dont l'espacement mutuel est réglable en continu en vue de modifier l'écartement, caractérisé par le fait que chaque pince de serrage (1) présente uniquement un axe (7) traversant le corps (2) de la pince de serrage (1), et avec lequel un maillon (9) (par exemple un maillon intérieur) vient en prise ; par le fait qu'un autre maillon (10) (par exemple un maillon extérieur) vient par ailleurs en prise avec l'axe (7) ; et par le fait que ce maillon (10) est réalisé sous la forme d'un levier coudé de réglage (11) à l'une des extrémités duquel est monté, à rotation, un premier galet de réglage (12) qui prend appui sur une première partie mobile d'une glissière de commande (15), sensiblement perpendiculaire à l'axe longitudinal de la chaîne, un second galet de réglage (13) étant disposé à l'autre extrémité de ce maillon (10), galet dont l'axe (27) traverse les deux maillons (9, 10) et un chaînon (8), lequel galet roule sur une seconde partie mobile d'une glissière de commande (14).

2. Appareil selon la revendication 1, caractérisé par le fait que chaque glissière de commande est réalisée en deux parties et est constituée de la glissière intérieure réglable de commande (15), guidée avec mobilité dans une glissière extérieure réglable de commande (14) ; et par le fait que le galet de réglage (13) roule sur la glissière extérieure de commande (14), et est monté à rotation sur l'axe (27) qui traverse le maillon extérieur (10), le chaînon (8) et le maillon intérieur (9).

3. Appareil selon la revendication 1 ou 2, caractérisé par le fait que le corps (2) de la pince est profilé sensiblement en un C dans la région intérieure duquel sont implantés les dispositifs de guidage constitués, pour l'essentiel, de galets de guidage (5) qui sont disposés sur des axes s'étendant verticalement, et roulent sur des surfaces de roulement d'une glissière de guidage (4) réalisée sous la forme d'un ruban élastique ; et est par ailleurs constitué d'un galet de support (6) qui est monté rotatif sur un axe s'étendant horizontalement, et répercute le poids propre de la pince de serrage (1) sur la face supérieure de la glissière de guidage (4).

4. Appareil selon l'une des revendications 1-3, caractérisé par le fait qu'une force d'écartement est engendrée entre les glissières extérieure et intérieure de commande (14, 15), à l'aide d'un dispositif d'écartement, en vue de régler l'espacement (29, 29') entre les pinces de serrage (1).

5. Appareil selon la revendication 4, caractérisé par le fait que le dispositif d'écartement est réalisé sous la forme d'un écrou mené en rotation, comprenant des premier et second segments taraudés dont les pas des filets sont en sens inverse, et dans lesquels pénètrent des broches filetées associées prenant appui, par leurs extrémités, sur les deux glissières de commande (14, 15).

6. Appareil selon la revendication 4, caractérisé par le fait que le dispositif d'écartement est réalisé sous la forme d'un excentrique mené en rotation et prenant appui, par ses surfaces excentrées, sur les glissières intérieure et extérieure de commande (14, 15).
